# EUROPEAN PATENT APPLICATION

(11) **EP 2 801 398 A1**
(43) Date of publication of application: **12.11.2014**
(21) Application number: 14165613.2
(22) Date of filing: 23.04.2014
(51) Int. Cl.: B01D 19/00, B04C 5/04

(54) **Hydraulic fluid filter-deaerator**

(30) Priority: 06.05.2013 US 201313888101
(71) Applicant: Deere & Company, Moline, IL 61265-8098 (US)
(72) Inventor: Marvin, Paul D., Dewitt, IA 52742 (US)
(74) Representative: Holst, Sönke

(57) **Abstract**

A filter-deaerator (100) for hydraulic fluid reservoir (102) comprises a chamber (104) that is generally cylindrical and has with a hydraulic fluid inlet (106) at an upper portion (124) thereof that injects hydraulic fluid into the chamber (104) in a direction tangent to an inner wall (108) of the chamber (104). The lower portion (126) of the chamber (104) is configured to be fixed to a hydraulic fluid filter.

## Description

This invention relates to hydraulic circuit components. More particularly, it relates to hydraulic fluid filters and hydraulic fluid deaerators.

### Background

Hydraulic fluid used in hydraulic circuits is typically returned to a hydraulic fluid reservoir once it has been used in the hydraulic circuit. The hydraulic fluid reservoir serves as a source from which the hydraulic pump can draw hydraulic fluid and reuse it.

The hydraulic fluid that is reused must be both cleaned and deaerated. If bubbles are entrained in the hydraulic fluid, the hydraulic fluid will become compressible, due to the compression of the bubbles in the fluid.

What is needed is an improved arrangement for filtering and deaerating hydraulic fluid that is returned to a hydraulic reservoir.

It is an object of this invention to provide such an arrangement.

### Summary

In accordance with one aspect of the invention, hydraulic fluid filter-deaerator (100) for a hydraulic fluid reservoir (102) is provided, the filter-deaerator (100) comprising a chamber (104) that is generally cylindrical and has a hydraulic fluid inlet (106) at an upper end thereof configured to inject hydraulic fluid into the chamber (104) in a direction tangent to an interior surface of the chamber (104), the chamber (104) further comprising a cover (112) enclosing an upper portion (124), the cover having an aperture (114) passing therethrough, wherein the aperture (114) is configured to pass gas separated from the hydraulic fluid injected into the chamber (104), the chamber (104) having a lower portion (126) configured to accumulate the hydraulic fluid injected into the chamber (104), the lower portion (126) further comprising a filter mount (138), the filter mount (138) being configured to receive hydraulic fluid filter element (120) disposed underneath the lower portion (126).

The hydraulic fluid filter-deaerator (100) may further comprise the hydraulic fluid filter element (120).

The chamber (104) may have a circular cross-section.

The chamber (104) may have an inner wall (108) that tapers inwardly such that the inner wall (108) has a smaller internal diameter as the hydraulic fluid spirals downward from the upper portion (124) to the lower portion (126).

The upper portion (124) may be disposed outside the hydraulic fluid reservoir (102).

The lower portion (126) may be disposed inside the hydraulic fluid reservoir (102).

The hydraulic fluid filter-deaerator (100) may further comprise mounting members (128) configured to mount the hydraulic fluid filter-deaerator (100) to the top of the hydraulic fluid reservoir (102).

The mounting members (128) may be fixed to an outer surface of the chamber (104), and may be configured to be fixed to an upper surface (122) of the hydraulic fluid reservoir (102).

The mounting members (128) may comprise flanges extending out from an outer surface of the chamber (104).

The flanges may define holes (130) that are configured to receive a removable fastener (132).

The removable fastener (132) may be a threaded member extending upward from an upper surface (122) of the hydraulic fluid reservoir (102).

A wall of the hydraulic fluid reservoir (102) may define an aperture (118) extending therethrough, the hydraulic fluid filter-deaerator (100) may further comprise a conduit (116) extending between and fluidly coupling the aperture (114) in the cover (112) and the aperture (118) extending through the wall of the hydraulic fluid reservoir (102).

An upper surface (122) of the hydraulic fluid reservoir (102) may define an aperture (136) dimensioned to slidably receive the lower portion (126).

### Brief Description of the Drawings

Figure 1 is a side view of a hydraulic fluid reservoir incorporating a filter-deaerator in accordance with the present invention.
Figure 2 is a plan view of the hydraulic fluid filter-deaerator.

### Detailed Description

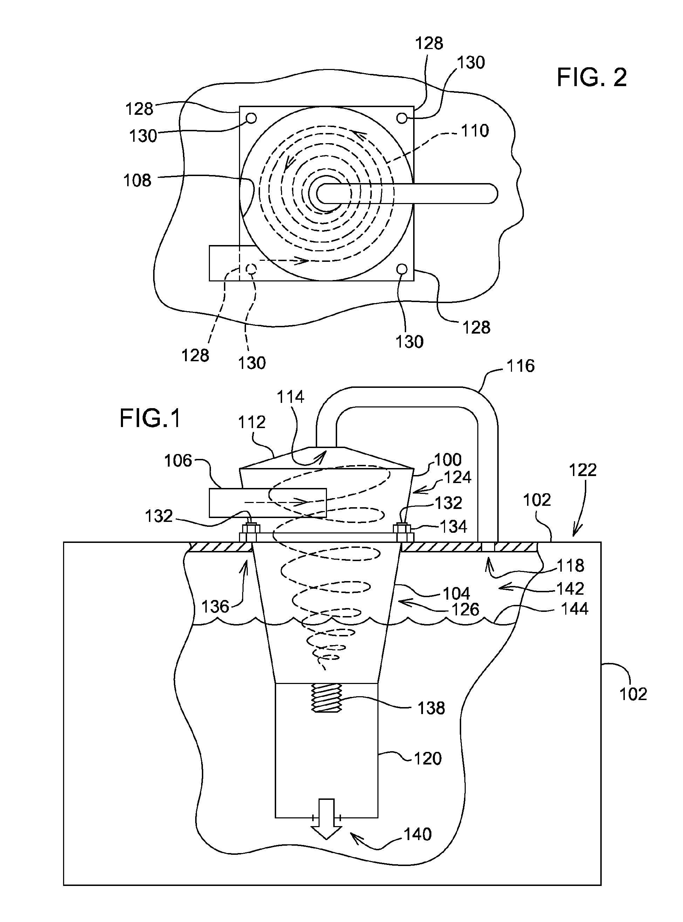

Referring to Figure 1 and Figure 2, a filter-deaerator 100 is mounted on a top surface of a hydraulic fluid reservoir 102. The filter-deaerator 100 comprises a chamber 104 that is in the form of a cylinder. A hydraulic fluid inlet 106 is fixed to an upper portion of the chamber 104 to receive hydraulic fluid returning from a hydraulic circuit. The hydraulic fluid inlet is disposed to direct hydraulic fluid into the chamber 104 in a direction tangent to an inner wall 108 of the chamber 104. This arrangement causes the hydraulic fluid entering the chamber 104 to travel in a circular path 110 around the inner wall 108 of the chamber 104. As the hydraulic fluid entering the chamber 104 travels in this circular path, it increases the gravity gradient in the hydraulic fluid, which thereby causes any gas bubbles entrained in the hydraulic fluid to be released by the fluid.

The filter-deaerator is enclosed at its upper end with a cover 112. An aperture 114 is provided in the cover 112 to which a conduit 116 extends. Conduit 116 is in fluid communication with an upper portion of the hydraulic fluid reservoir 102. In this case, the conduit 116 is shown fixed to the filtered-deaerator at one end, and fixed to an aperture 118 in the top of the hydraulic fluid reservoir 102 at its other end.

By this arrangement of the conduit 116, the conduit 116 permits gas released from hydraulic fluid to be communicated into a gas filled space in the upper portion of the hydraulic fluid reservoir 102, thus equalizing the pressure and ensuring that any residual hydraulic fluid entrained with the gas passing through the conduit 116 eventually accumulates in the hydraulic fluid reservoir 102 it is not released into the atmosphere.

The deaerated hydraulic fluid spirals downward along the inner wall to the bottom of the chamber 104 and thence into a filter element 120 that is removably fixed to the bottom of the chamber 104. The filter element 120 in one arrangement, the filter element 120 is of the replaceable type, being comprised of paper, or other permeable membrane which can be periodically replaced when it comes dirty with a clean filter element.

In this manner, hydraulic fluid can be deaerated before it enters the filter cartridge.

The chamber 104 is configured to be mounted to an upper surface 122 of the hydraulic fluid reservoir 102. The chamber 104 comprises an upper portion 124 that extends outside the upper surface 122 and the lower portion 126 that extends inside the hydraulic fluid reservoir 102. Mounting members 128 are fixed to the outside of the chamber 104 and are configured to be fixed to the upper surface 122. The mounting members 128 comprise four flanges that extend outward from the chamber 104 and generally parallel to the upper surface 122. The four flanges have holes 130 formed therein through which removable fasteners 132 can extend. In this case, the removable fasteners 132 are threaded studs that are fixed to the upper surface 122 and extend upward therefrom. The removable fasteners 132 extend through the holes 130 in the mounting members. Securing members 134 (here shown as nuts) are fixed to the removable fasteners 132 and compress the mounting members 128 to the upper surface 122. The lower portion 126 of the chamber 104 is inserted into a large aperture 136 in the top of the hydraulic fluid reservoir 102, such that the removable fasteners extend through the holes 130. Once in place, the securing members 134 attached, thus holding the chamber 104 in its proper position partially inside and partially outside of the hydraulic fluid reservoir 102.

The lower end of chamber 104 includes a filter mount 138, here shown as a threaded member. The filter element 120 is attached to the filter mount 138 such that all hydraulic fluid falling to the bottom of the chamber 104 is forced to travel through the filter element 120. Once the hydraulic fluid passes through the filter element 120, it is released from an aperture 140 in the filter element 120. Hydraulic fluid released from the aperture 140 passes into the open cavity 142 that defines the interior of the hydraulic fluid reservoir 102.

In practice, the filter element 120 can be periodically replaced by releasing the securing members 134, lifting the chamber 104 with the filter element 120 attached thereto out of the hydraulic fluid reservoir 102. Once removed from the hydraulic fluid reservoir 102, the operator can grasp the chamber 104 with one hand, grasp the filter element 120 with the other hand, and unscrew the filter element 120 from the chamber 104. The operator can then screw a fresh filter element 120 on to the bottom of the chamber 104, insert the entire assembly back into the large aperture 136 in upper surface 122, insert the removable fasteners 132 through the holes 130, and reattached the securing members 134.

In the arrangement shown herein, the filter element 120 is configured to be suspended from the bottom of the chamber 104 such that it is submerged below the surface of the hydraulic fluid inside the hydraulic fluid reservoir 102 when the hydraulic fluid inside the hydraulic fluid reservoir 102 is at its normal operating level 144.

The device described above is an example of an actual example of the invention and its several variations. Other arrangements of the invention are possible. The invention itself is defined by the claims below.

## Claims

1. A hydraulic fluid filter-deaerator (100) for a hydraulic fluid reservoir (102), the filter-deaerator (100) comprising:
a chamber (104) that is generally cylindrical and has a hydraulic fluid inlet (106) at an upper end thereof configured to inject hydraulic fluid into the chamber (104) in a direction tangent to an interior surface of the chamber (104), the chamber (104) further comprising a cover (112) enclosing an upper portion (124), the cover having an aperture (114) passing therethrough, wherein the aperture (114) is configured to pass gas separated from the hydraulic fluid injected into the chamber (104), the chamber (104) having a lower portion (126) configured to accumulate the hydraulic fluid injected into the chamber (104), the lower portion (126) further comprising a filter mount (138), the filter mount (138) being configured to receive hydraulic fluid filter element (120) disposed underneath the lower portion (126).

2. The hydraulic fluid filter-deaerator (100) of Claim 1, further comprising the hydraulic fluid filter element (120).

3. The hydraulic fluid filter-deaerator (100) of Claim 1, wherein the chamber (104) has a circular cross-section.

4. The hydraulic fluid filter-deaerator (100) of Claim 3, wherein the chamber (104) has an inner wall (108) that tapers inwardly such that the inner wall (108) has a smaller internal diameter as the hydraulic fluid spirals downward from the upper portion (124) to the lower portion (126).

5. The hydraulic fluid filter-deaerator (100) of Claim 1, wherein the upper portion (124) is disposed outside the hydraulic fluid reservoir (102).

6. The hydraulic fluid filter-deaerator (100) of Claim 5, wherein the lower portion (126) is disposed inside the hydraulic fluid reservoir (102).

7. The hydraulic fluid filter-deaerator (100) of Claim 6, further comprising mounting members (128) configured to mount the hydraulic fluid filter-deaerator (100) to the top of the hydraulic fluid reservoir (102).

8. The hydraulic fluid filter-deaerator (100) of Claim 7, wherein the mounting members (128) are fixed to an outer surface of the chamber (104), and are configured to be fixed to an upper surface (122) of the hydraulic fluid reservoir (102).

9. The hydraulic fluid filter-deaerator (100) of Claim 7, wherein the mounting members (128) comprise flanges extending out from an outer surface of the chamber (104).

10. The hydraulic fluid filter-deaerator (100) of Claim 9, wherein the flanges define holes (130) that are configured to receive a removable fastener (132).

11. The hydraulic fluid filter-deaerator (100) of Claim 10, wherein the removable fastener (132) is a threaded member extending upward from an upper surface (122) of the hydraulic fluid reservoir (102).

12. The hydraulic fluid filter-deaerator (100) of Claim 1, wherein a wall of the hydraulic fluid reservoir (102) defines an aperture (118) extending therethrough, the hydraulic fluid filter-deaerator (100) further comprising a conduit (116) extending between and fluidly coupling the aperture (114) in the cover (112) and the aperture (118) extending through the wall of the hydraulic fluid reservoir (102).

13. The hydraulic fluid filter-deaerator (100) of Claim 6, wherein an upper surface of the hydraulic fluid reservoir (102) includes an aperture (136) dimensioned to slidably receive the lower portion (126).
